(19) Europäisches Patentamt
European Patent Office
Office européen des brevets

(11) **EP 4 733 717 A1**

(12) **EUROPEAN PATENT APPLICATION**

(43) Date of publication:
**29.04.2026 Bulletin 2026/18**

(21) Application number: **25194771.9**

(22) Date of filing: **08.08.2025**

(51) International Patent Classification (IPC):
**G01C 11/00** $^{(2006.01)}$  **A01B 79/00** $^{(2006.01)}$
**G01C 15/00** $^{(2006.01)}$  **G06V 20/10** $^{(2022.01)}$
**G06V 20/56** $^{(2022.01)}$

(52) Cooperative Patent Classification (CPC):
**G01C 11/00; G01C 15/00; G06V 20/188;
G06V 20/194; G06V 20/56**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.10.2024 JP 2024186186**

(71) Applicant: **Hitachi, Ltd.
Tokyo 100-8280 (JP)**

(72) Inventors:
• **HASEGAWA, Hiroaki
Tokyo, 100-8280 (JP)**
• **YABUUCHI, Shin
Tokyo, 100-8280 (JP)**
• **TAKAHASHI, Hiromasa
Tokyo, 100-8280 (JP)**
• **WATANABE, Koichi
Tokyo, 100-8280 (JP)**

(74) Representative: **MERH-IP Matias Erny Reichl
Hoffmann
Patentanwälte PartG mbB
Paul-Heyse-Straße 29
80336 München (DE)**

(54) **GENERATION APPARATUS, GENERATION METHOD, AND GENERATION PROGRAM**

(57) An appropriate map is generated from an image obtained by imaging a ground surface on the ground surface.

A generation apparatus (202) including a processor (301) that executes a program, and a storage device (302) that stores the program stores terrain data (111) including position information of each point of terrain and obtained by modeling the terrain, first image data obtained by imaging a subject that is a part of the terrain from a first imaging point on the terrain, and position information of the first imaging point, and executes de-termination processing of determining a point as an allocation destination to which information regarding a specific pixel corresponding to a line-of-sight vector in a pixel group forming the first image data is to be allocated based on a direction of the line-of-sight vector from the first imaging point to the subject, and generation processing of generating map data (112) corresponding to the terrain by allocating the information regarding the specific pixel determined by the determination processing to the point as the allocation destination.

FIG. 2

**Description**

Technical Field

The present invention relates to a generation apparatus, a generation method, and a generation program for generating data.

Background Art

In imaging of a natural environment (downward imaging) by a satellite or a drone, frequent data acquisition is not possible because the imaging and flight become difficult depending on weather conditions. As complementary means, or as new means, it is conceivable to generate a map representing a situation of a natural environment such as a plant by an imaging device provided in a mobile body such as a railway.

For example, Patent Literature 1 below discloses an overhead line position measurement apparatus that performs non-contact three-dimensional position measurement also for an overhead line other than a trolley line using an inspection car. The overhead line position measurement apparatus includes first and second three-dimensional measurement devices, first and second cameras, a region-of-interest setting unit that sets at least one region of interest based on angle data and distance data generated by each of the first and second three-dimensional measurement devices, an image processing unit that executes image processing of masking an image outside the region of interest on each of first image data and second image data generated by the first and second cameras, respectively, and accumulates the first image data and the second image data in a memory, an overhead line extraction unit that extracts an overhead line satisfying a predetermined condition from a two-dimensional image represented by each of the first image data and the second image data that are accumulated, and an overhead line position calculation unit that calculates a position of the overhead line with respect to a railway vehicle based on coordinates of the overhead line extracted by the overhead line extraction unit.

In addition, Patent Literature 2 below discloses an illumination spectrum estimation method. The estimation method calculates an illumination spectrum based on weather information.

Citation List

Patent Literature

Patent Literature **1:** JP 2014-169939 A
Patent Literature **2:** WO 2012/86658 A

Summary of Invention

Technical Problem

A camera installed in a railway vehicle according to a related art mainly has a front angle of view, and a range that can be covered for map generation is limited. In addition, for plant observation, it is desired to observe a visible region with high wavelength resolution while observing an infrared region, and thus, it is necessary to analyze spectral information.

An object of the present invention is to generate an appropriate map from an image obtained by imaging a ground surface on the ground surface.

Solution to Problem

A generation apparatus according to one aspect of an invention disclosed in the present application is a generation apparatus including: a processor that executes a program; and a storage device that stores the program, characterized in that the storage device stores terrain data including position information of each point of terrain and obtained by modeling the terrain, first image data obtained by imaging a subject that is a part of the terrain from a first imaging point on the terrain, and position information of the first imaging point, and the processor executes: determination processing of determining a point as an allocation destination to which information regarding a specific pixel corresponding to a line-of-sight vector in a pixel group forming the first image data is to be allocated based on a direction of the line-of-sight vector from the first imaging point to the subject; and generation processing of generating map data corresponding to the terrain by allocating the information regarding the specific pixel determined by the determination processing to the point as the allocation destination.

Advantageous Effects of Invention

According to the representative embodiment of the present invention, it is possible to generate an appropriate map from an image obtained by imaging a ground surface on the ground surface. Problems, configurations, and effects other than those described above will become apparent by the following description of embodiments.

Brief Description of Drawings

Fig. 1 is an explanatory diagram illustrating an example of map generation.
Fig. 2 is an explanatory diagram illustrating a configuration example of a map generation system.
Fig. 3 is a block diagram illustrating a hardware configuration example of a computer.
Figs. 4A and 4B are explanatory diagrams illustrating a configuration example of a mobile body.
Fig. 5 is an explanatory diagram illustrating an example of plan information.
Fig. 6 is a flowchart illustrating an example of a self-position estimation processing procedure of the mobile body.
Fig. 7 is an explanatory diagram illustrating a relationship between a world coordinate system and each variable.
Fig. 8 is an explanatory view illustrating a vehicle body inclination angle.
Fig. 9 is a block diagram illustrating a functional configuration example of a generation apparatus.
Fig. 10 is a flowchart illustrating an example of a map data generation processing procedure performed by the generation apparatus.
Fig. 11 is an explanatory diagram illustrating an example of determination processing executed by a determination unit.
Fig. 12 is an explanatory diagram illustrating an example of imaging information.
Fig. 13 is an explanatory diagram illustrating an example of an input/output screen.
Fig. 14 is an explanatory diagram illustrating an example of a display screen displayed by an output unit.

Description of Embodiments

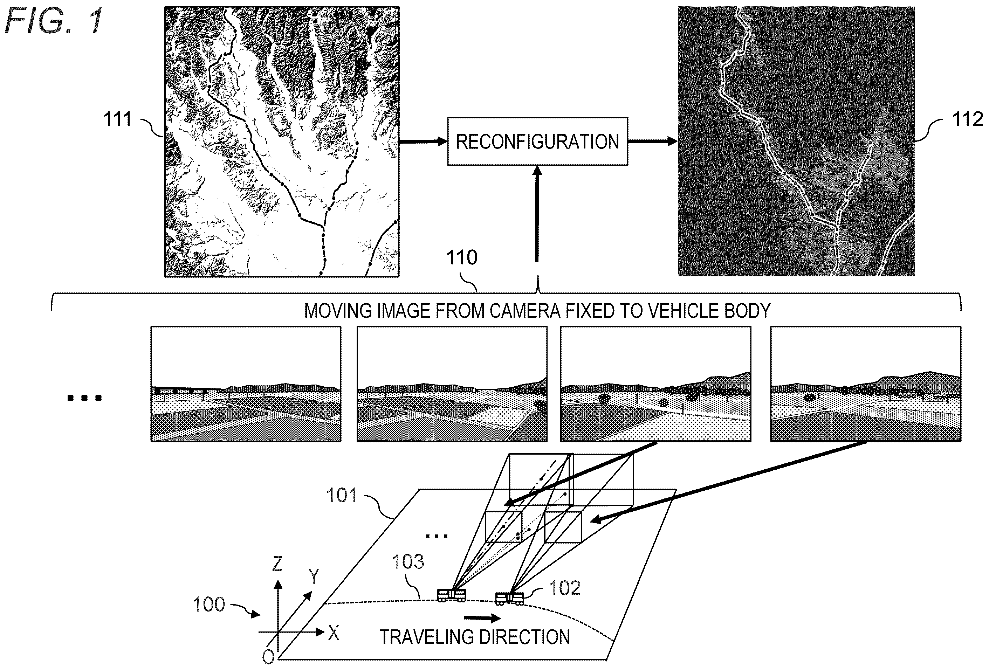

<Fig. 1 Example of Map Generation>

Fig. 1 is an explanatory diagram illustrating an example of map generation. In Fig. 1, a world coordinate system 100 is a coordinate system that defines the real world. An X axis, a Y axis, and a Z axis that intersect one another at an origin O are orthogonal to one another. An XY plane corresponds to an ideal ground surface at an altitude of 0, and a point on the XY plane is represented by a distance (hereinafter, referred to as Y distance) from the origin O corresponding to latitude and a distance (hereinafter, referred to as X distance) from the origin O corresponding to longitude. The Z axis indicates a vertical direction. An actual ground surface 101 has undulations in a Z-axis direction with respect to the XY plane.

A mobile body 102 moves along a track 103. In the present example, the mobile body 102 is a train, and the track 103 is a railroad. The mobile body 102 includes imaging devices provided on both sides. An optical axis of the imaging device is orthogonal to a traveling direction of the mobile body 102 and is parallel to the XY plane. The imaging device performs imaging at a predetermined timing and generates an image data sequence 110. The image data sequence 110 may be moving image data. The imaging device may be a camera that generates image data by dispersing light emitted from a subject for each wavelength and imaging the light, such as a multispectral camera or a hyperspectral camera.

The map generation is processing of generating map data 112 by reconfiguring terrain data 111 with the image data sequence 110 generated by the imaging device during the movement of the mobile body 102. The terrain data 111 is, for example, a digital elevation model (DEM) or a digital surface model (DSM) obtained by digitizing the ground surface 101, and is a three-dimensional model in which the ground surface 101 is divided into equally spaced squares called meshes, and each square has an elevation value of a center point.

In Fig. 1, the mobile body 102 moving along the track 103 is a train traveling on the railroad, but the track 103 may be a suspension-type monorail, and the mobile body 102 may be a train traveling while being suspended from the monorail. Further, if a traveling route is determined, the track 103 may be a road (or a general road or expressway). In this case, the mobile body 102 is an automobile.

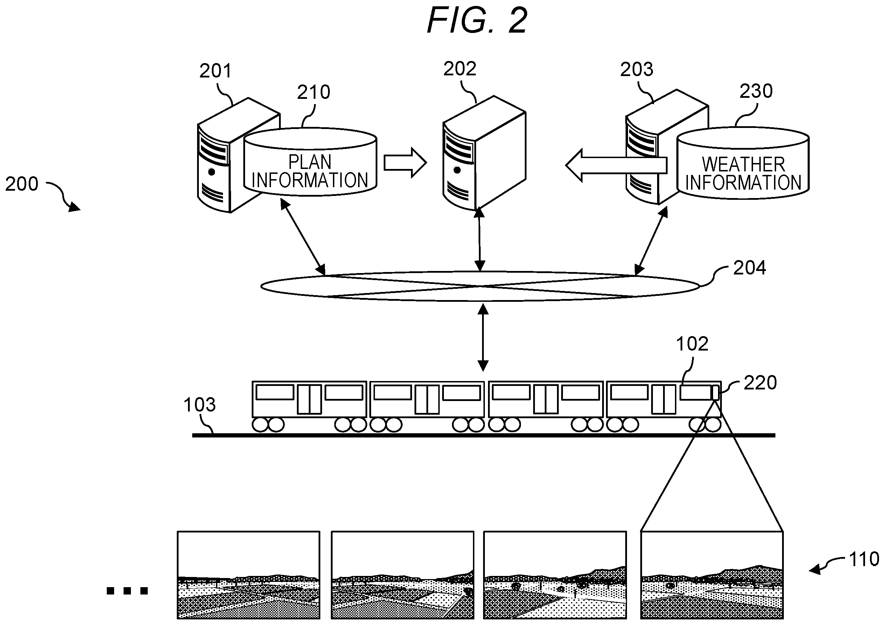

<Fig. 2 Map Generation System>

Fig. 2 is an explanatory diagram illustrating a configuration example of a map generation system. A map generation system 200 includes a mobile body 102 and at least a generation apparatus 202 among a management apparatus 201, the generation apparatus 202, and a distribution apparatus 203. The management apparatus 201, the generation apparatus 202, the distribution apparatus 203, and the mobile body 102 are communicably connected by a network such as the Internet, a local area network (LAN), or a wide area network (WAN).

The management apparatus 201 manages plan information 210. The plan information 210 is information for managing operation of the mobile body 102 and a position and a height of the track 103 in the world coordinate system 100. The management apparatus 201 transmits the plan information 210 to the generation apparatus 202.

The generation apparatus 202 generates the map data 112 by reconfiguring the terrain data 111 with the image data sequence 110 generated by the imaging device during the movement of the mobile body 102.

The distribution apparatus 203 is, for example, an existing weather server that is an external service, and distributes weather information 230 to the generation apparatus 202.

The mobile body 102 includes an imaging device 220 and moves on the track 103. The imaging device 220 is disposed with the optical axis directed from a side surface of the mobile body 102 in a horizontal direction. The mobile body 102 transmits the image data sequence 110 to the generation apparatus 202.

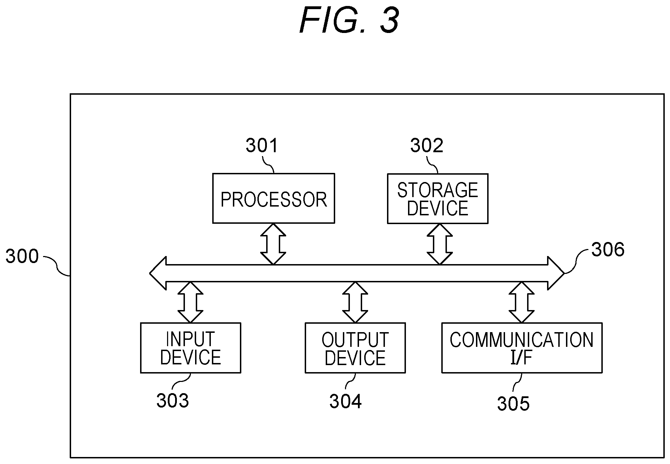

<Fig. 3 Hardware Configuration Example of Computer>

Fig. 3 is a block diagram illustrating a hardware configuration example of a computer. A computer 300 includes a processor 301, a storage device 302, an input device 303, an output device 304, and a communication interface (communication IF) 305. The processor 301, the storage device 302, the input device 303, the output device 304, and the communication IF 305 are connected by a bus 306. The processor 301 controls the computer 300. The storage device 302 is a work area of the processor 301. The storage device 302 is a non-transitory or transitory recording medium that stores various programs and data. Examples of the storage device 302 include a read only memory (ROM), a random access memory (RAM), a hard disk drive (HDD), and a flash memory. The input device 303 inputs data. Examples of the input device 303 include a keyboard, a mouse, a touch panel, a numeric keypad, a scanner, a microphone, and a sensor. The output device 304 outputs data. Examples of the output device 304 include a display, a printer, and a speaker. The communication IF 305 is connected to the network 204 to transmit and receive data.

The computer 300 is mounted on the management apparatus 201, the generation apparatus 202, the distribution apparatus 203, and the mobile body 102.

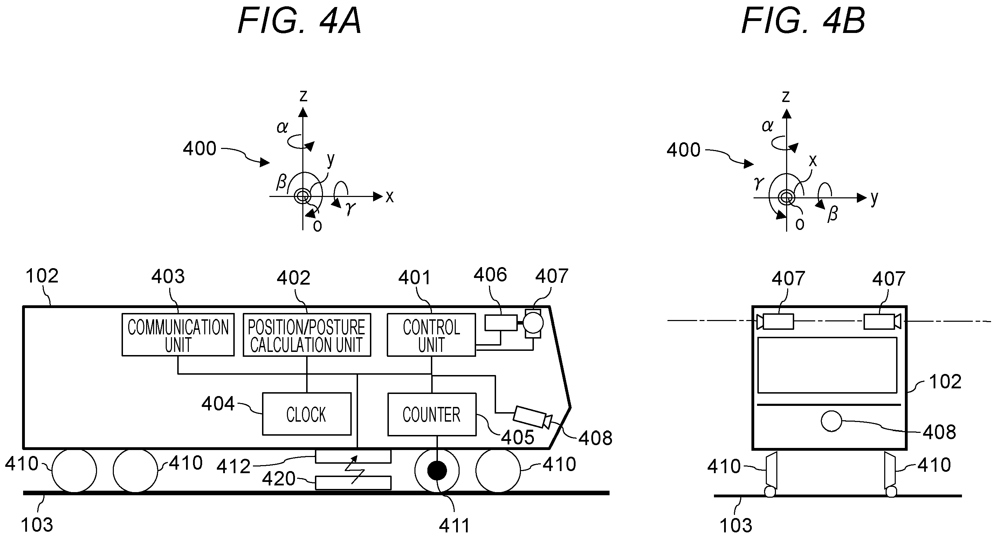

<Fig. 4 Configuration Example of Mobile Body 102>

Figs. 4A and 4B are explanatory diagrams illustrating a configuration example of the mobile body 102. Fig. 4A is a schematic partial side cross-sectional view of the mobile body 102, and Fig. 4B is a front view of the mobile body 102. A local coordinate system 400 is a coordinate system that defines a direction of the mobile body 102. An x axis, a y axis, and a z axis that intersect one another at an origin o are orthogonal to one another.

The x axis is a normal line from a front surface of the mobile body 102 and indicates the traveling direction of the mobile body 102. The y axis is a normal line from a side surface of the mobile body 102, and defines the optical axis of the imaging device 220 (side imaging device 407). The z axis is a normal line from a top surface of the mobile body 102 and indicates a height direction of the mobile body 102. $\alpha$ is a rotation angle around the z axis and is referred to as a yaw angle $\alpha$. A direction thereof is referred to as a yaw direction $\alpha$. $\beta$ is a rotation angle around the y axis and is referred to as a pitch angle $\beta$. A direction thereof is referred to as a pitch direction $\beta$. $\gamma$ is a rotation angle around the x axis, and is referred to as a roll angle $\gamma$. A direction thereof is referred to as a roll direction $\gamma$.

The mobile body 102 includes a control unit 401, a position/posture calculation unit 402, a communication unit 403, a clock 404, a counter 405, a roll angle compensation mechanism 406, the side imaging device 407, a front imaging device 408, wheels 410, a rotary encoder 411, and a pickup coil 412. Further, a wayside coil 420 is installed on the track 103.

The control unit 401 controls various steps of processing executed by the mobile body 102. The control unit 401 is implemented by causing the processor 301 to execute a program stored in the storage device 302.

The position/posture calculation unit 402 calculates a position and a posture of the mobile body 102 in the world coordinate system 100. The posture is the yaw angle $\alpha$, the pitch angle $\beta$, and the roll angle $\gamma$ of the mobile body 102. The position/posture calculation unit 402 is implemented by causing the processor 301 to execute a program stored in the storage device 302.

The communication unit 403 transmits data to the generation apparatus 202 via the network 204 and receives data (for example, the plan information 210) from the management apparatus 201. The communication unit 403 is implemented by the communication IF 305.

The clock 404 measures a current time. The counter 405 counts pulses output from the rotary encoder 411. The roll angle compensation mechanism 406 compensates for a shift of the side imaging device 407 in the roll direction $\gamma$.

The side imaging device 407 is an imaging device whose optical axis is set to a y-axis direction. The side imaging device 407 is installed on both a right side and a left side in the traveling direction. The side imaging device 407 on the right side is referred to as a right side imaging device 407, and the side imaging device 407 on the left side is referred to as a left side imaging device 407.

The front imaging device 408 is installed on the front surface of the mobile body 102. The front imaging device 408 is installed with an optical axis facing the ground surface at a predetermined angle from an x-axis direction. Therefore, the front imaging device 408 images the track 103 in the traveling direction. The side imaging device 407 and the front imaging device 408 will be collectively referred to as the imaging device 220.

The wheel 410 rotates on the track 103 to move the mobile body 102 in the traveling direction. The rotary encoder 411 is provided on a rotation shaft of the wheel 410, and outputs $N_{ppr}$ pulses to the counter 405 during one rotation of the wheel 410.

The pickup coil 412 can perform non-contact communication with the wayside coil 420. When the pickup coil 412 is positioned immediately above the wayside coil 420, position information of the wayside coil 420 held by the wayside coil 420 is received from the wayside coil 420.

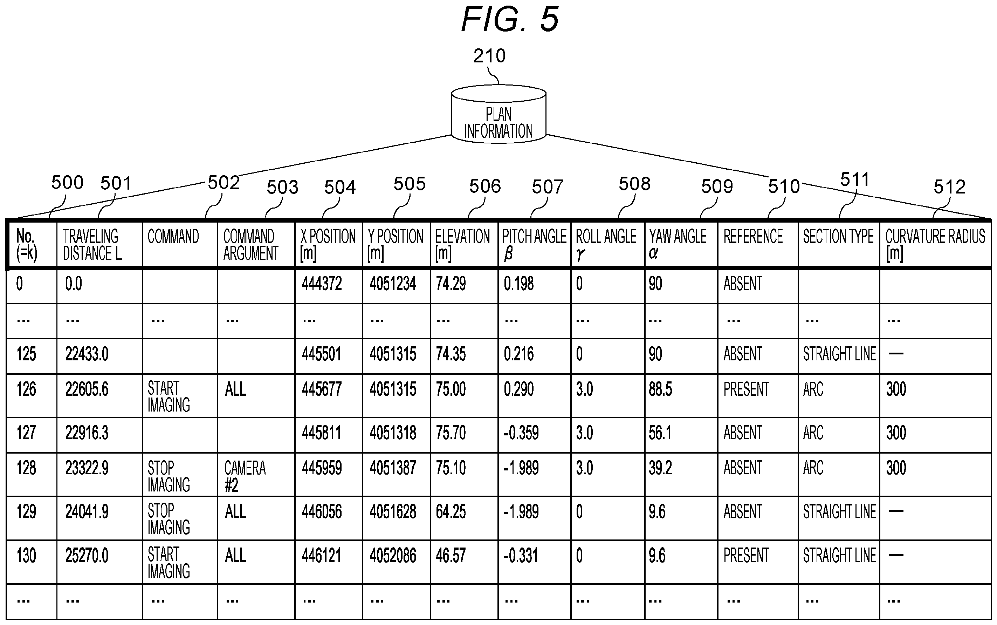

<Fig. 5 Plan Information 210>

Fig. 5 is an explanatory diagram illustrating an example of the plan information 210. The plan information 210 includes, as fields, a number 500, a traveling distance 501, a command 502, a command argument 503, an X position 504, a Y position 505, an elevation 506, a pitch angle 507, a roll angle 508, a yaw angle 509, a reference 510, (desirably) a section type 511, and a curvature radius 512.

The number 500 holds, as a value, a number k that is an integer in ascending order starting from k=0. The number k=0 is an index indicating a departure point of the mobile body 102. As the number k increases, the traveling distance L increases.

The traveling distance 501 holds, as a value, a traveling distance L from the departure point (k=0) of the mobile body 102 corresponding to the number k.

The command 502 holds, as a value, a command ("start imaging" or "stop imaging") instructed by the control unit 401 for the imaging device 220 at a position of the mobile body 102 that corresponds to the number k.

The command argument 503 holds, as a value, an argument of the command 502. "ALL" means the right side imaging device 407, the left side imaging device 407, and the front imaging device 408. "Camera #0" means the front imaging device 408, "camera #1" means the right side imaging device 407, and "camera #2" means the left side imaging device 407.

The X position 504 holds, as a value, a position corresponding to a longitude direction of the world coordinate system 100 that corresponds to the number k.

The Y position 505 holds, as a value, a position corresponding to a latitude direction of the world coordinate system 100 that corresponds to the number **k.**

The elevation 506 holds, as a value, a height in the Z-axis direction of the world coordinate system 100 that corresponds to the number **k.**

The pitch angle 507 holds, as a value, the pitch angle $\beta$ of the mobile body 102 at positions (the X position 504, the Y position 505, and the elevation 506) of the mobile body 102 in the world coordinate system 100 that correspond to the number **k.**

The roll angle 508 holds, as a value, the roll angle $\gamma$ of the mobile body 102 at the positions (the X position 504, the Y position 505, and the elevation 506) of the mobile body 102 in the world coordinate system 100 that correspond to the number **k.**

The yaw angle 509 holds, as a value, the yaw angle $\alpha$ of the mobile body 102 at the positions (the X position 504, the Y position 505, and the elevation 506) of the mobile body 102 in the world coordinate system 100 that correspond to the number **k.**

The reference 510 indicates the presence or absence of a reference reflector at the positions (the X position 504, the Y position 505, and the elevation 506) in the world coordinate system 100 that correspond to the number k.

The section type 511 is information for distinguishing, as a value, whether a section of the traveling distance 501 of the number k is a straight line or an arc.

The curvature radius 512 is a reciprocal of a curvature that is an index indicating the degree of bending in a case where the section of the traveling distance 501 of the number k is an arc.

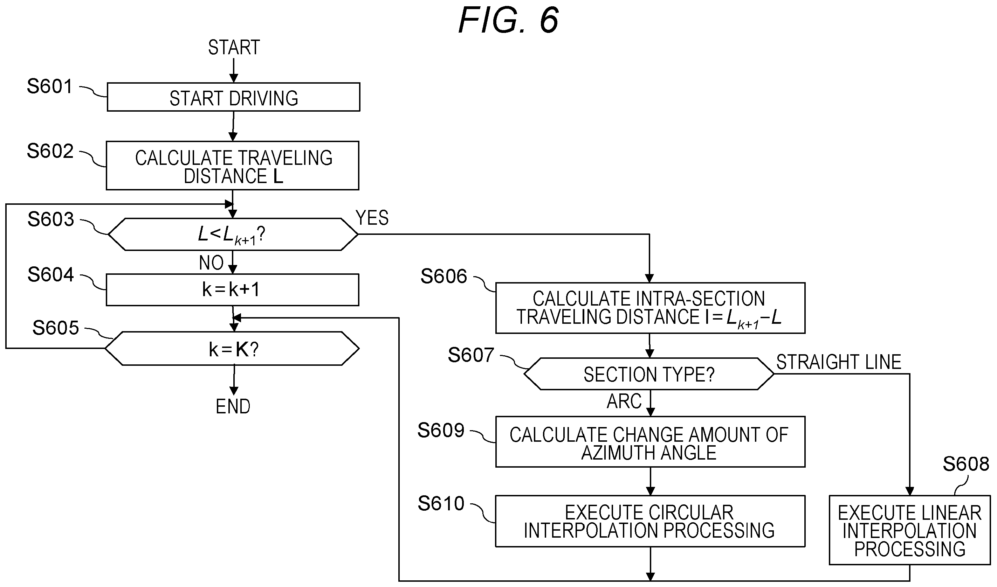

<Fig. 6 Example of Self-Position Estimation Processing Procedure of Mobile Body 102>

Fig. 6 is a flowchart illustrating an example of a self-position estimation processing procedure of the mobile body 102. In an initial state, it is assumed that an entry with the number 500 of k=0, a column of the number 500, and a column of the traveling distance 501 are set in the plan information 210. In addition, it is assumed that the x axis which is the traveling direction of the mobile body 102 is also set, and a conversion matrix from the local coordinate system 400 to the world coordinate system 100 is also set.

(Step S601)

The mobile body 102 starts driving. Since the wheel 410 rotates when the driving starts, the rotary encoder 411 outputs a pulse to the counter 405 each time the wheel 410 makes one rotation. A counting result of the counter 405 is denoted as $N_{wheel}$.

(Step S602)

The control unit 401 acquires $N_{wheel}$ as the counting result of the counter 405 and calculates the traveling distance L. During the driving, the output of the pulse from the rotary encoder 411 continues except during stop of the mobile body 102 at an intermediate station, and thus, the control unit 401 calculates the traveling distance L each time the counting result $N_{wheel}$ is updated. The traveling distance L is calculated by the following Expression (1). In the following Expression (1), D represents a diameter of the wheel 410. Further, $N_{ppr}$ is the number of pulses (pulse per revolution (ppr)) output by the rotary encoder 411 per rotation of the wheel.
[Math. 1]

$$L = \pi D \cdot \frac{N_{wheel}}{N_{ppr}} \cdots (1)$$

(Step S603)

The control unit 401 determines whether or not the traveling distance L satisfies $L < L_{k+1}$. $L_{k+1}$ is a value of the traveling distance 501. In a case where the traveling distance L does not satisfy $L < L_{k+1}$ (step S603: No), the processing proceeds to step S604. In a case where the traveling distance L satisfies $L < L_{k+1}$ (step S603: Yes), the processing proceeds to step S606.

(Step S604)

The control unit 401 increments k and proceeds to step S605.

(Step S605)

The control unit 401 determines whether or not k = **K.** K is a value of the number 500 corresponding to an arrival point of the mobile body 102. In a case where k is not K (step S605: No), the processing returns to step S603. In a case where k is K (k = K) (step S605: Yes), the self-position estimation processing of the mobile body 102 ends.

(Step S606)

The position/posture calculation unit 402 calculates an intra-section traveling distance $l = L_{k+1} - L$. The section is from a point of the traveling distance L to a point of $L_{k+1}$.

(Step S607)

The position/posture calculation unit 402 determines whether the section type 511 of the intra-section traveling distance l is a straight line or an arc. In a case where it is determined that the section type 511 is a straight line (step S607: straight line), the processing proceeds to step S608. In a case where it is determined that the section type 511 is an arc (step S607: arc), the processing proceeds to step S609. As an alternative method, the position/posture calculation unit 402 may refer to the curvature radius 512 to determine that the section type 511 is an arc when there is a value.

(Step S608)

The position/posture calculation unit 402 executes linear interpolation processing and proceeds to step S605. That is, the control unit 401 estimates a self-position P in a current straight line section. The self-position P is calculated by the following Expression (2). The self-position P is a vector including the X position and the Y position.

[Math. 2]

$$P = P_k + \frac{l}{L_{k+1} - L_k}(P_{k+1} - P_k) \cdots (2)$$

(Step S609)

The position/posture calculation unit 402 calculates a change amount of an azimuth angle $\theta$ of a tangent of the track 103.

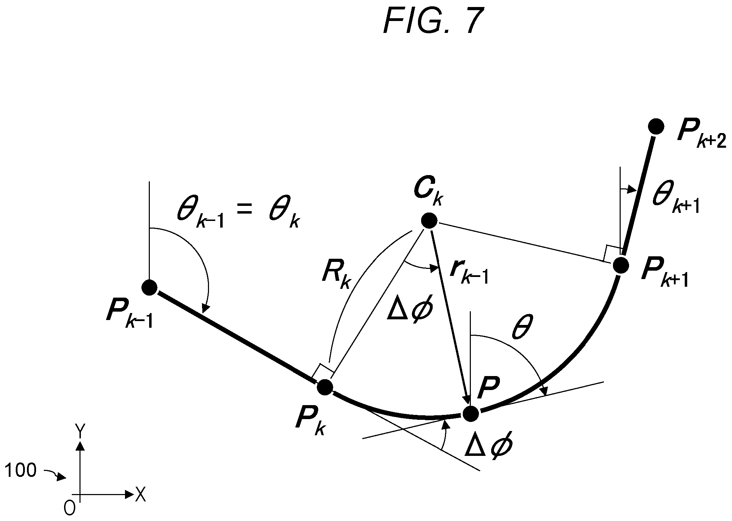

[Fig. 7 Relationship between World Coordinate System 100 and Each Variable]

Fig. 7 is an explanatory diagram illustrating a relationship between the world coordinate system 100 and each variable. In Fig. 7, when a center point of an arc in the k-th arc section is represented by $C_k$, a distance between $C_k$ and the k-th self-position $P_k$ is represented by $R_k$, and a vector indicating the self-position P on the arc from $C_k$ is represented by $r_{\varphi,k}$, $r_{\varphi,k}$ is expressed by the following Expression (3). Here, $R_k$ is equal to a value stored in the k-th curvature radius 512.

[Math. 3]

$$r_{k,\varphi} = R_k \cdot \begin{pmatrix} \cos\varphi \\ \sin\varphi \end{pmatrix} \cdots (3)$$

$\varphi$ on the right side of the above Expression (3) is a polar angle, an angle formed with respect to the X axis (an eastward direction is positive), and a counterclockwise direction is a positive direction. A relationship with the azimuth angle $\theta$ is expressed by the following Expression (4).

$$\varphi = 90° - \theta \cdots (4)$$

Therefore, the change amount $\Delta\theta$ of the azimuth angle $\theta$ in the arc section is expressed by the following Expression (5).

[Math. 4]

$$\Delta\varphi = \frac{360°}{2\pi} \cdot \frac{l}{R_k} \cdots (5)$$

(Step S610)

The position/posture calculation unit 402 executes circular interpolation processing and proceeds to step S605. That is, the control unit 401 estimates the self-position P in the current arc section. The self-position P is calculated by the following Expression (6).

[Math. 5]

$$P = C_k + r_{k,\varphi_k + \Delta\varphi} \cdots (6)$$

$r_{k,\varphi_k+\Delta\varphi}$ on the right side of the above Expression (6) is a vector in a case where $\varphi_k+\Delta\varphi$ is substituted into $\varphi$ of the above Expression (3).

As a result, the values of the X position 504 and the Y position 505 of the plan information 210 are set. The position/posture calculation unit 402 may calculate the elevation 506 at the traveling distance $L_k$ at k with an altimeter. As a result, the value of the elevation 506 is set.

In addition, the position/posture calculation unit 402 calculates the pitch angle β by differentiation of the elevation 506, calculates the yaw angle α from the azimuth angle θ of the tangent of the track 103, and calculates the roll angle γ from a relational expression between the curvature of the track 103 and a rail inclination angle determined at the time of track design.

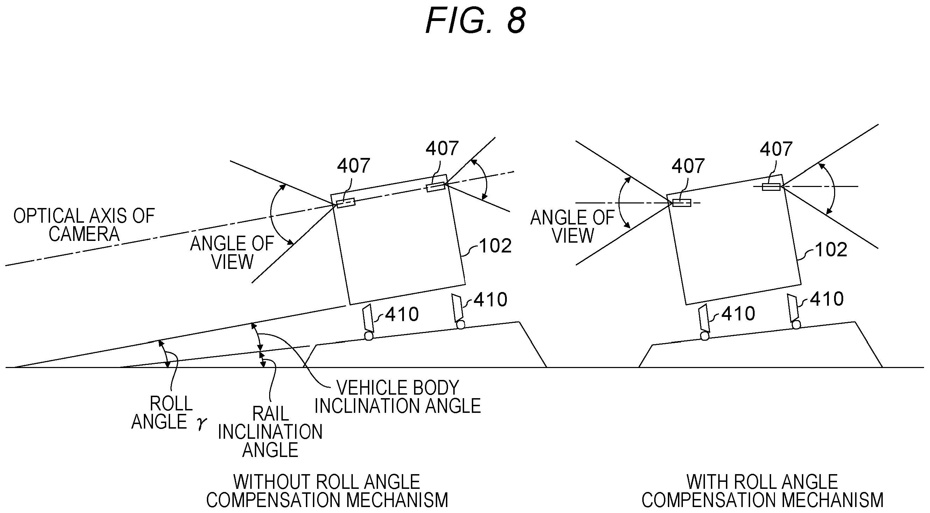

[Fig. 8 Vehicle Body Inclination Angle]

Fig. 8 is an explanatory diagram illustrating a vehicle body inclination angle. In a case where the mobile body 102 includes the roll angle compensation mechanism 406, the vehicle body inclination angle is added to the roll angle γ. The vehicle body inclination angle is an angle obtained by subtracting a known rail inclination angle from the roll angle γ.

By approximating a section with an arc, it is possible to reduce a table size of the plan information 210 and improve accuracy of the self-position estimation processing. For example, a horizon distance from a viewpoint height of 4 m is about 7.5 km, and in order to achieve a resolution equivalent to that of a satellite picture (for example, 15 m) at this distance, the side imaging device 407 with an angle of view at which 1 pixel = about 0.11 degrees is required. At the same time, it is necessary to achieve the estimation accuracy for the azimuth angle θ in the same order as this value, and in the case of polygonal approximation (linear approximation), it is necessary to divide a section corresponding to 90 degrees of a curve into 810 rows and describe the divided rows in the plan information 210. On the other hand, in a case where a curve section is treated as an arc, two rows of a start point and an end point of the arc section are sufficient, and a data amount can be compressed to about 1/400. Such an effect is particularly significant in sections where curves are continuous.

The mobile body 102 transmits the plan information 210 generated in this manner to the management apparatus 201. In the management apparatus 201, the command 502 and the command argument 503 are set by a user operation. In this manner, the plan information 210 illustrated in Fig. 5 is generated. The management apparatus 201 transmits the generated plan information 210 to the generation apparatus 202.

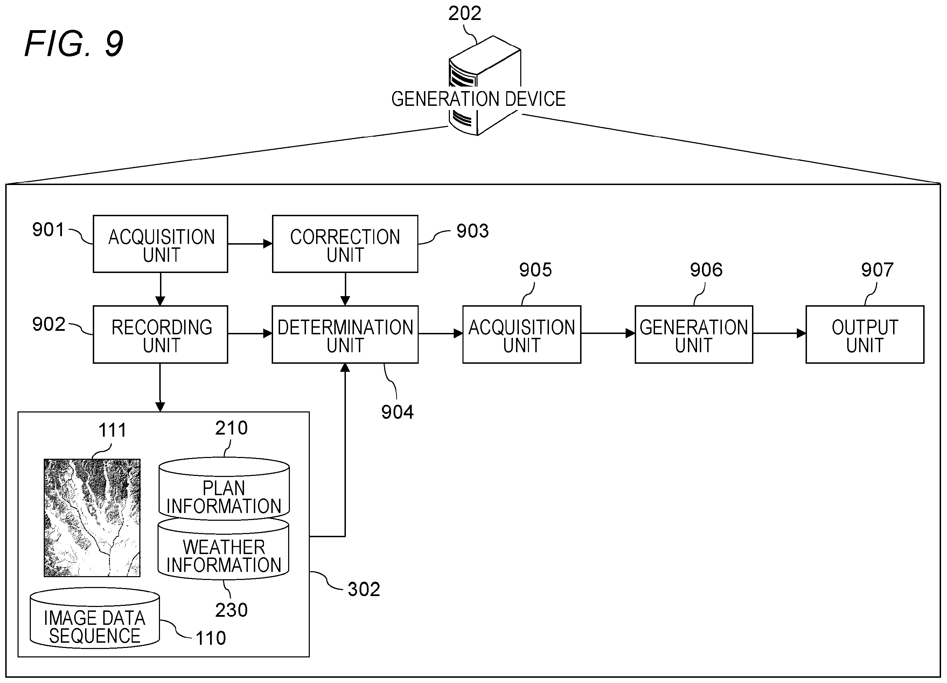

<Fig. 9 Functional Configuration Example of Generation Apparatus 202>

Fig. 9 is a block diagram illustrating a functional configuration example of the generation apparatus 202. The generation apparatus 202 includes an acquisition unit 901, a recording unit 902, a correction unit 903, a determination unit 904, an acquisition unit 905, a generation unit 906, and an output unit 907. These are implemented by causing the processor 301 to execute a program stored in the storage device 302.

The acquisition unit 901 inputs data. Specifically, for example, the image data sequence 110 is input from the mobile body 102, the plan information 210 is input from the management apparatus 201, and the weather information 230 is input from the distribution apparatus 203. The acquisition unit 901 also inputs the terrain data 111 from the outside.

The recording unit 902 records the data input by the acquisition unit 901 in the storage device 302. As a result, the storage device 302 stores the terrain data 111, the plan information 210, and the weather information 230.

The correction unit 903 corrects the position (the X position 504, the Y position 505, and the elevation 506) of the mobile body 102 in the plan information 210.

The determination unit 904 determines a point on the terrain data 111 that is an allocation destination to which information regarding a pixel in the image data of the image data sequence 110 is to be allocated. Specifically, for example, the determination unit 904 determines a point as an allocation destination to which information regarding a specific pixel corresponding to a line-of-sight vector in a pixel group forming the image data of the image data sequence 110 is to be allocated based on a direction of the line-of-sight vector from an imaging point of the mobile body 102 to the subject (point G).

The acquisition unit 905 acquires spectrum information. The spectrum information is a light source spectrum, a luminance spectrum, and a reflectance spectrum. Furthermore, the acquisition unit 905 acquires information regarding a specific pixel based on the light source spectrum.

The generation unit 906 generates the map data based on the spectrum information. Specifically, for example, the generation unit 906 generates the map data corresponding to terrain by allocating the information regarding the specific pixel determined by the determination unit 904 to the point G as the allocation destination. For example, the generation unit 906 generates reflection spectrum map data and vegetation evaluation map data.

The reflection spectrum map data is map data in which an intensity of a reflectance for a specific wavelength band (or a plurality of bands) required according to the purpose of analysis and a geographical distribution thereof are drawn using the spectrum information of the reflectance of the ground surface at each point.

The vegetation evaluation map data is map data obtained by calculating a vegetation evaluation index based on luminance spectrum information or reflection spectrum information and drawing a distribution of the vegetation evaluation index at each point. For the vegetation evaluation index and the calculation thereof, for example, known indices such as a normalized difference vegetation index (NDVI), a chlorophyll concentration, and a water stress index, and a calculation method thereof are used.

The output unit 907 outputs the map data generated by the generation unit 906 in a displayable manner. Specifically, for example, the output unit 907 may display the map data, or may transmit the map data to another computer that displays the map data.

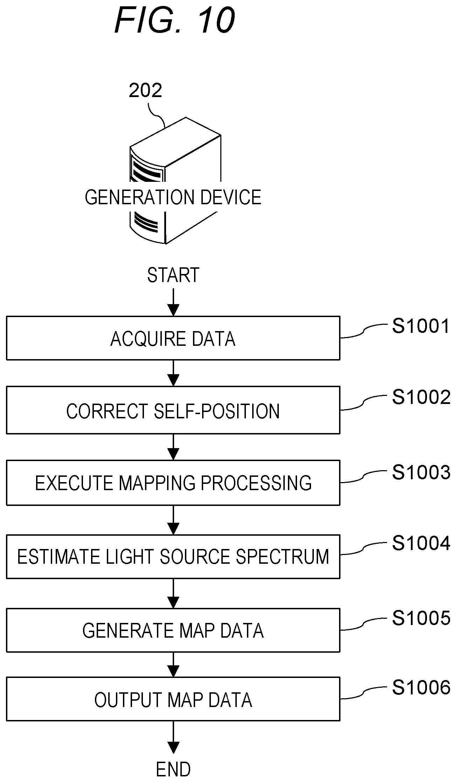

<Fig. 10 Example of Map Data Generation Processing Procedure>

Fig. 10 is a flowchart illustrating an example of a map data generation processing procedure performed by the generation apparatus 202.

(Step S1001)

The acquisition unit 901 acquires data. Specifically, for example, the acquisition unit 901 acquires the terrain data 111 and the plan information 210 from the management apparatus 201, acquires the weather information from the distribution apparatus 203, and acquires the image data sequence 110 from the mobile body 102. The recording unit 902 records the data acquired by the acquisition unit 901 in the storage device 302.

(Step S1002)

The correction unit 903 corrects the self-position P. Specifically, for example, a position estimation error due to a change in diameter D of the wheel 410 or sliding occurs. In order to correct such an error, the correction unit 903 performs correction of the self-position P by using a known marker existing on the ground.

For example, the pickup coil 412 receives the number k and the position information (the X position, the Y position, and the elevation) of the wayside coil 420 during the movement of the mobile body 102. In the generation apparatus 202, the acquisition unit 901 receives the number k and the position information (the X position, the Y position, and the elevation) of the wayside coil 420 from the mobile body 102. Then, the generation apparatus 202 updates the plan information 210 with the position information of the number k (the X position, the Y position, and the elevation).

Furthermore, a difference in roll angle between the numbers k and k+1 is detected by comparing the track 103 of the image data of the number k captured by the front imaging device 408 with the track 103 of the image data of the number k+1. The generation apparatus 202 updates the roll angle 508 such that a difference in roll angle between the numbers k and k+1 in the acquired plan information 210 becomes the detected difference in roll angle between the numbers k and k+1.

Step S1002 may be performed not by the generation apparatus 202 but by the mobile body 102. As a result, the acquisition unit 901 can acquire the corrected plan information 210 in step S1001.

(Step S1003)

The determination unit 904 determines the point G on the terrain data 111 as the allocation destination of the information regarding the pixel of the image data based on a monoplot method of a photogrammetry technology. Specifically, for example, the determination unit 904 converts (translates and rotates) a coordinate value of each vertex of the mesh included in the terrain data 111 from a coordinate value of the world coordinate system 100 to a coordinate value of the local coordinate system 400. The determination unit 904 may perform rectification (distortion correction) on each piece of image data of the image data sequence 110 acquired by the acquisition unit 901 by using an internal calibration parameter acquired in advance.

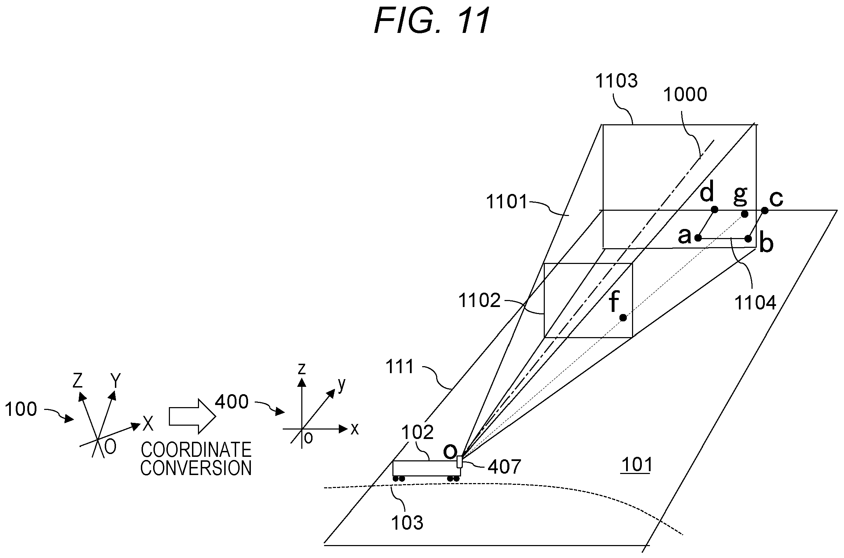

[Fig. 11 Example of Determination Processing]

Fig. 11 is an explanatory diagram illustrating an example of determination processing executed by the determination unit 904. The y axis of the local coordinate system 400 coincides with an optical axis 1000 of the side imaging device 407. In Fig. 11, the ground surface 101, the mobile body 102, the track 103, and the side imaging device 407 in the real space are also illustrated in the terrain data 111 for convenience of description.

A viewing frustum 1101 indicates an imaging range of the side imaging device 407. The viewing frustum 1101 has a front surface 1102 close to the side imaging device 407 and a back surface 1103 farther away from the side imaging device 407 than the front surface 1102. That is, a display content from the front surface 1102 to the back surface 1103 is the image data included in the image data sequence 110.

A pixel of the image data on the front surface 1102 of the viewing frustum 1101 is f(x,z). A vector extending from the camera origin o of the local coordinate system 400 toward the pixel f(x,z) is defined as a line-of-sight vector of.

The determination unit 904 specifies a mesh (a mesh 1104 in Fig. 11) on or behind the front surface 1102 and closest to the camera origin o among meshes intersecting the terrain data 111 when extending the line-of-sight vector of, and an intersection thereof. Vertices included in the mesh 1104 are defined as a to d. The intersection between the mesh 1104 and the line-of-sight vector of on the mesh 1104 is g. The mesh 1104 and the intersection g may be a point inside the viewing frustum 1101 or a point outside the viewing frustum 1101 as long as the point is on a back side of the front surface 1102 in the y-axis direction.

The determination unit 904 associates the pixel f(x,z) with the intersection g in the terrain data 111. In this manner, the determination unit 904 searches for the intersection g for each pixel f(x,z) in the image data corresponding to the front surface 1102, and associates the pixel f(x,z) with the intersection g.

Furthermore, the determination unit 904 inversely converts (translates and rotates) a coordinate value of the intersection g from a coordinate value of the local coordinate system 400 to a coordinate value of the world coordinate system 100. The intersection g after the inverse conversion is defined as the point G. As a result, the coordinate value of the world coordinate system 100 is set for the point G of the terrain data 111. In addition, various types of information are set for the point G.

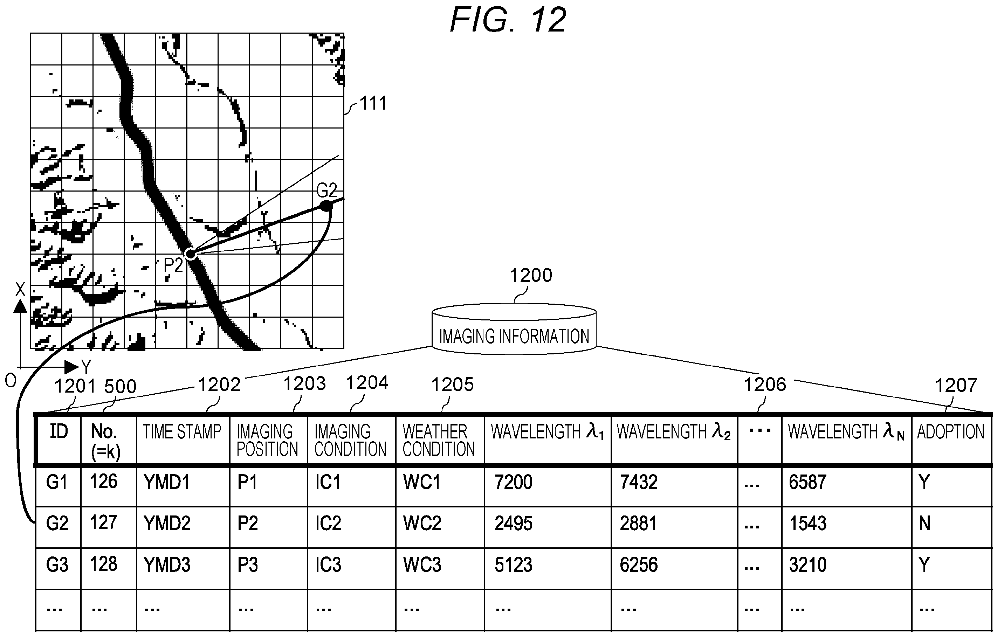

[Fig. 12 Example of Imaging Information]

Fig. 12 is an explanatory diagram illustrating an example of imaging information. Imaging information 1200 includes, for each point G, a point ID 1201, a number 500, a time stamp 1202, an imaging position 1203, an imaging condition 1204, a weather condition 1205, wavelength information 1206, and an adoption flag 1207.

The point ID 1201 is identification information for uniquely specifying the point G. The number 500 is identification information specifying the X position 504, the Y position 505, and the elevation 506 allocated to the point G.

The time stamp 1202 is an imaging date and time of the image data including a pixel whose pixel information is allocated to the point G, and is acquired from metadata included in the image data.

The imaging condition 1204 is a condition set for imaging by the side imaging device 407 that has generated the image data including the pixel whose pixel information is allocated to the point G, and is acquired from the metadata included in the image data. Specifically, the imaging condition 1204 is, for example, a shutter speed, an aperture, a gain, or ISO sensitivity.

The weather condition 1205 is weather information at the imaging date and time specified by the time stamp 1202, and is acquired from the distribution apparatus 203 by the acquisition unit 901. The weather condition 1205 is specifically, for example, weather, sun altitude, solar radiation amount, cloud cover, and visibility distance.

The wavelength information 1206 is a wavelength included in the pixel of the image data including the pixel allocated to the point G, and is acquired from the metadata included in the image data.

The adoption flag 1207 is a flag indicating whether or not to adopt the allocation of the information regarding the pixel to the point G. Specifically, for example, the determination unit 904 may make a determination based on the luminance spectrum included in the information regarding the pixel. For example, the allocation of the information regarding the pixel to the point G may be determined to be adopted (Y) in a case where the luminance spectrum is equal to or greater than a first threshold and equal to or less than a second threshold, and otherwise (for example, if the luminance spectrum is less than the first threshold, a light amount is insufficient, and if the luminance spectrum is greater than the second threshold, the light amount is saturated), the allocation of the pixel information to the point G may be determined to be not adopted (N).

In addition, the determination unit 904 determines whether or not the point G is covered with a shadow of a building or a tree based on the sun altitude in the weather condition and the position of the point G. Then, in a case where the point G is covered with a shadow, the determination unit 904 may determine not to adopt the allocation of the information regarding the pixel to the point G (N). The determination unit 904 may delete the image data in which the number of pixels that correspond to the point G and are not adopted is equal to or larger than a predetermined number. As a result, a size of the image data sequence 110 stored in the storage device 302 can be reduced. Further, by deleting such image data, it is possible to suppress deterioration in quality of the image data sequence 110.

In addition, the determination unit 904 may receive the adoption or non-adoption of the allocation of the information regarding the pixel to the point G by a user operation.

(Step S1004)

The acquisition unit 905 acquires a spectrum of light for each point G. The spectrum of light includes a light source spectrum $I(\lambda)$, a luminance spectrum $A(\lambda)$, and a reflectance spectrum $R(\lambda)$.

The light source spectrum $I(\lambda)$ can be acquired by the following three methods. Which method is adopted is set in advance.

• 1. Method of Performing Direct Measurement

It is assumed that a pyranometer having a band and a wavelength resolution similar to those of an imaging band of the side imaging device 407 is installed at the imaging point on the mobile body 102 or the track 103. The pyranometer measures and records the light source spectrum $I(\lambda)$ in real time. The light source spectrum $I(\lambda)$ measured by the pyranometer is transmitted to the generation apparatus 202 via the network 204 together with a time stamp which is a measurement date and time.

• 2. Method of Imaging Reference Reflector Having Known Reflection Characteristic

It is assumed that a reference reflector whose reflectance spectrum $Rref(\lambda)$ [%] and shape pattern are known, such as a white reflector or a checkerboard, is installed on the track 103 (the value "present" of the reference 510). The reference reflector may be a white plate having a known reflectance $Rref(\lambda)$ [%] uniform in a plane, or may be a sign or a facility wall surface having a standardized coating material. The side imaging device 407 images the reference reflector during the movement of the mobile body 102.

The control unit 401 of the mobile body 102 detects the shape pattern of the reference reflector from the image data obtained by imaging the reference reflector by pattern matching, and calculates the light source spectrum $I(\lambda)$ for each pixel of the image data by the following Expression (7) using a luminance spectrum $Aref(\lambda)$ of the pixel of the detected shape pattern and the known reflectance $Rref(\lambda)$ [%].

$$I(\lambda) = Aref(\lambda)/Rref(\lambda) \ ... \ (7)$$

In the present example, the light source spectrum $I(\lambda)$ for each pixel is embedded in the metadata of the image data. Therefore, the acquisition unit 905 acquires the light source spectrum $I(\lambda)$ for each point G as the allocation destination of the information regarding the pixel from the metadata of each piece of image data in the image data sequence 110.

• 3. Method of Performing Estimation from Weather Condition, Location, and Time

Outdoor illumination is caused when sunlight reaches the ground surface 101 through a scattering and absorption process by the atmosphere or clouds. Since different attenuation occurs for each band in this process, the light source spectrum is determined according to a passing distance in the atmosphere (which can be calculated from the sun altitude determined by latitude and longitude and a date and time) and the presence or absence of clouds. An arrival path of the sunlight roughly includes a direct component and a diffuse component, and the light source spectrum $I(\lambda)$ at an imaged point P can be acquired by distributing weights based on the cloud cover.

In the present example, the light source spectrum $I(\lambda)$ for each pixel is embedded in the metadata of the image data. Therefore, the acquisition unit 905 acquires the light source spectrum $I(\lambda)$ for each point G as the allocation destination of the information regarding the pixel from the metadata of each piece of image data in the image data sequence 110.

When the light source spectrum $I(\lambda)$ is acquired by the above 1 to 3, the acquisition unit 905 obtains the reflectance spectrum $R(\lambda)$ by the following method. Specifically, for example, the luminance spectrum $A(\lambda)$ of a light beam received by an imaging element of the side imaging device 407 is expressed by the following Expression (8).

$$A(\lambda) = I(\lambda) \cdot R(\lambda) \cdot S_{tc}(\lambda, \ L) \ ... \ (8)$$

$R(\lambda)$ is the reflectance spectrum [%] at each point (that is, each vertex of the mesh of the terrain data 111) on the ground surface 101. $S_{tc}(\lambda,L)$ is a transmittance considering scattering and absorption in a path between the subject (point G) and the side imaging device 407.

The following Expression (9) is obtained by rearranging Expression (8) for $R(\lambda)$.

[Math. 6]

$$R(\lambda) = \frac{A(\lambda)}{I(\lambda) \cdot S_{tc}(\lambda, L)} \ \cdots (9)$$

In Expression (9) above, the reflectance spectrum $R(\lambda)$, which is an unknown value, can be determined from $A(\lambda)$ observed by the imaging element of the side imaging device 407, known $I(\lambda)$, and $S_{tc}(\lambda,L)$.

Here, the transmittance $S_{tc}(\lambda,L)$ will be described. The transmittance $S_{tc}(\lambda,L)$ is a coefficient indicating an amount of transmitted light after a light beam undergoes scattering and absorption while passing through the atmosphere, and Rayleigh scattering and Mie scattering are typically known for a process of scattering and absorption of a light beam. The Rayleigh scattering and the Mie scattering are different from each other in influence due to a magnitude relationship between wavelengths of a scattering body and a light beam. For example, in a situation where there are not many scattering bodies such as raindrops and dust in the subject (or the scattering body may be ignored), a Rayleigh scattering coefficient $\sigma_R$ for each wavelength $\lambda$ is calculated by the following Expression (10).

[Math. 7]

$$\sigma_R = \frac{32\pi^3}{3N_0\lambda^4\rho}(\mathrm{n}(\lambda)-1)^2 \quad \cdots(10)$$

Assuming that an atmospheric density $\rho$ is constant, the transmittance $S_{tc}(\lambda,L)$ is expressed by the following Expression (11) with respect to the distance L according to the Lambert's law.

[Math. 8]

$$S_{tc}(\lambda,L) = \exp(-\sigma_R \int_0^L \rho\mathrm{dx}) \quad \cdots(11)$$

At this time, $N_0$ is a number density of scattering particles, and corresponds to the number of gas molecules present on an optical path of a unit length. $N_0$ is expressed by the following Expression (12) using the atmospheric density $\rho$, an average molecular weight M (28.964 mol/g in the earth's atmosphere), and an Avogadro constant NA.

[Math. 9]

$$N_0 = \frac{\rho \cdot 10^3 \cdot N_A}{M} \cdots(12)$$

From the above, it can be seen that the transmittance $S_{tc}(\lambda,L)$ decreases on a short wavelength side in inverse proportion to the fourth power of the wavelength $\lambda$, and the entire wavelength band is exponentially attenuated by the distance L to the subject (point G).

In Expression (10) above, $n(\lambda)$ is a refractive index of light having the wavelength $\lambda$, and depends on a density and a wavelength, and a representative value on the ground surface 101 is about $n-1 = 280 \times 10^6$. At this time, for $\rho = 1.22$ [kg/m$^3$]$\lambda$ = 400 [nm] and L = 7.5 [km], a transmittance $S_{tc} \approx 0.74$ is obtained, which cannot be ignored. Since such an influence changes according to the distance L from the side imaging device 407 (that is, a vertical direction in a field of view of the camera), appropriate correction is made for each point G.

Since the distance L between the side imaging device 407 and the point G and a positional relationship are known from the plan information 210 and the terrain data 111, the transmittance $S_{tc}(\lambda,L)$ is calculated. In addition, the light source spectrum $I(\lambda)$ is acquired by the methods 1 to 3. Therefore, the reflectance spectrum $R(\lambda)$ of Expression (8) above can be solved for each point G. For simplification of calculation, in a case where the transmittance $S_{tc}(\lambda,L)$ is ignored, $S_{tc}(\lambda,L)$ is excluded from Expression (8) above.

(Step S1005)

The generation unit 906 generates the map data based on the information regarding the pixel allocated to each point G. Specifically, for example, the generation unit 906 generates monochrome map data, color map data, the reflection spectrum map data, and the vegetation evaluation map data as the map data based on the light source spectrum I(A) .

The information regarding the pixel allocated to the point G may be the luminance spectrum $A(\lambda)$ of a pixel as an allocation source of the point G, or may be the reflectance spectrum $R(\lambda)$ obtained by Expression (9) above. For example, in the case of using the luminance spectrum $A(\lambda)$ as the information regarding the pixel, the generation unit 906 converts luminance components $A(\lambda a)$, $A(\lambda b)$, and $A(\lambda c)$ for wavelengths $\lambda a$, $\lambda b$, and $\lambda c$ of the pixel as the allocation source of the point G into luminance values of respective colors of R, G, and B on a screen.

Alternatively, in the case of using the reflectance spectrum $R(\lambda)$ as the information regarding the pixel, the generation unit 906 determines the luminance values of R, G, and B based on the reflectance components R($\lambda$a), R($\lambda$b), and R($\lambda$c) for the wavelengths $\lambda$a, $\lambda$b, and $\lambda$c. For example, the generation unit 906 adjusts visibility by multiplying each color by an appropriate weight such that the larger the reflectance component R, the higher the brightness.

Conversion from the wavelength $\lambda$ component in the luminance spectrum or the reflectance spectrum to the luminance can be performed by, for example, a known wavelength component-RGB converter. The wavelength component-RGB converter may be a function that outputs the luminance values of the respective colors of R, G, and B when the spectrum and the wavelength are input, or may be a table in which the wavelength component is associated with each of the luminance values of the colors of R, G, and **B.**

(Step S1006)

The output unit 907 outputs the map data generated by the generation unit 906 in a displayable manner. As a result, the map data generation processing executed by the generation apparatus 202 ends.

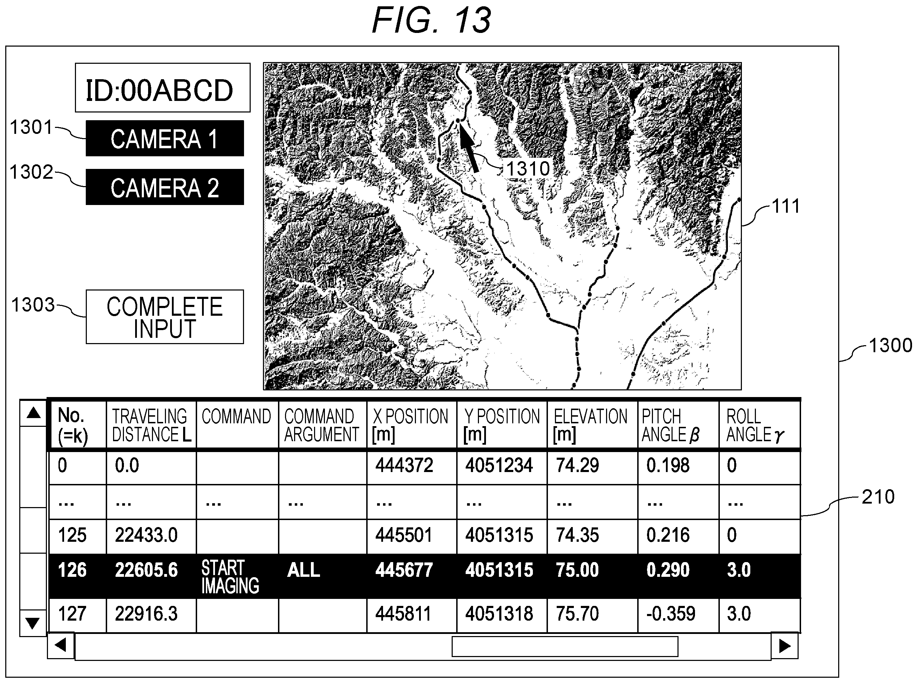

<Fig. 13 Input/Output Screen>

Fig. 13 is an explanatory diagram illustrating an example of an input/output screen. An input/output screen 1300 is displayed on the management apparatus 201 or the generation apparatus 202. The input/output screen 1300 may be displayed on a computer that can communicate with the management apparatus 201 or the generation apparatus 202.

The input/output screen 1300 displays the terrain data 111, the plan information 210, a cursor 1310, a first setting button 1301, a second setting button 1302, and an input completion button 1303.

When a point corresponding to the number 500 on the terrain data 111 is designated by the cursor 1310, an entry of the plan information 210 indicating the designated point is highlighted. In the example of Fig. 13, an entry with the number 500 of k=126 is highlighted. In a case where the entry of the plan information 210 is designated by the cursor 1310, a corresponding point on the terrain data 111 may be highlighted.

The first setting button 1301, the second setting button 1302, and the input completion button 1303 are user interfaces that can be set to ON or OFF by a user operation. In Fig. 13, white-outlined characters indicate ON.

The first setting button 1301 is a user interface for inputting "camera **#1"** (right side imaging device 407) to the command argument 503 of the designated entry of the plan information 210. In Fig. 13, the first setting button 1301 is in an ON state. When the first setting button 1301 is pressed again in the ON state, transition to an OFF state is made.

The second setting button 1302 is a user interface for inputting "camera #2" (left side imaging device 407) to the command argument 503 of the designated entry of the plan information 210. In Fig. 13, the second setting button 1302 is in the ON state. When the second setting button 1302 is pressed again in the ON state, transition to the OFF state is made.

In a case where both the first setting button 1301 and the second setting button 1302 are in the ON state, "ALL" is input to the command argument 503 of the designated entry of the plan information 210.

The input completion button 1303 is a user interface for confirming and completing the input of the command 502 and the command argument 503. The input to the command 502 can be performed by selection from a pull-down menu or text input. As a result, the command 502 and the command argument 503 are set in the plan information 210.

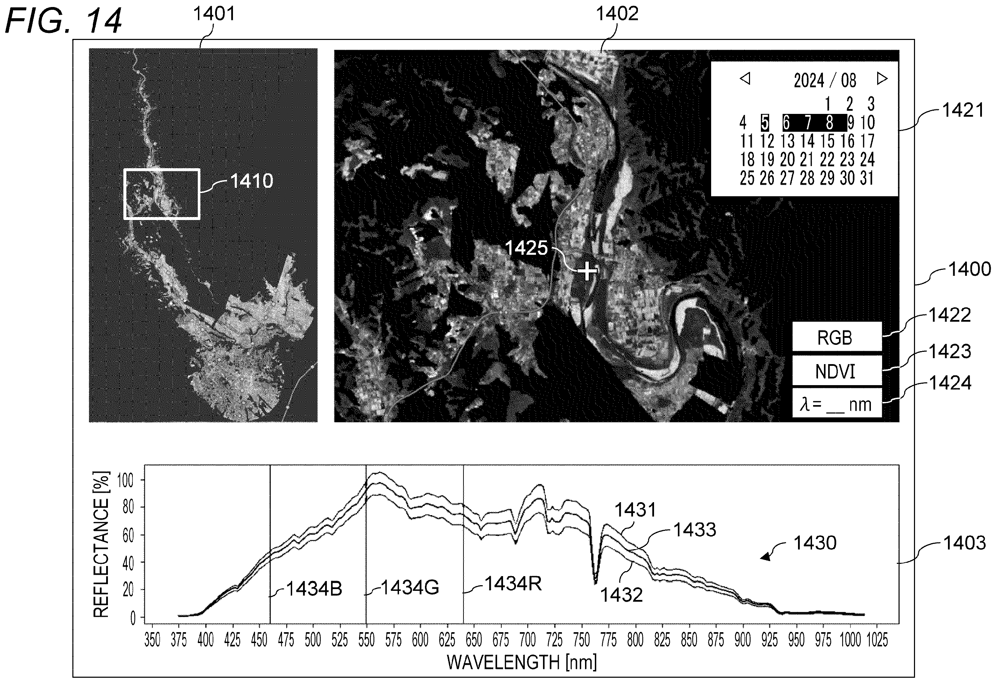

<Fig. 14 Display Screen>

Fig. 14 is an explanatory diagram illustrating an example of a display screen displayed by the output unit 907. A display screen 1400 includes a wide area map display region 1401, a detailed map display region 1402, and a spectrum display region 1403.

The wide area map display region 1401 displays the map data generated by the generation unit 906. In the wide area map display region 1401, a range designation cursor 1410 that can be moved in the wide area map display region 1401 by a user operation is displayed.

The detailed map display region 1402 enlarges and displays the map data in the range designation cursor 1410. The detailed map display region 1402 includes a calendar 1421, an RGB selection button 1422, an NDVI selection button 1423, and a wavelength input region 1424.

The calendar 1421 is a user interface that designates a period for displaying the map data. The calendar 1421 is a user interface for acquiring the wavelength information 1206 of the time stamp 1202 included in the period designated by the calendar 1421 from the imaging information 1200.

The RGB selection button 1422 is a user interface for selecting color display of the map data. When the RGB selection button 1422 is pressed, the point ID 1201 and the wavelength of an entry having a value within a range of 380 to 780 [nm] which is a wavelength band of visible light in the wavelength information 1206 are acquired from the imaging information 1200. A position indicated by the acquired point ID 1201 is specified from the X position 504 and the Y position 505 of the plan information 210 by the corresponding number 500 in the imaging information 1200.

An NDVI selection button 1423 is a user interface for selecting normalized difference vegetation index (NDVI) display of the map data. An NDVI is a vegetation evaluation index indicating the presence or absence of vegetation and the degree of activity from a ratio of a difference between and the sum of two values by using reflectance values R at two wavelengths as expressed by the following Expression (13).

[Math. 10]

$$NDVI = \frac{R(\lambda_{IR}) - R(\lambda_{RED})}{R(\lambda_{IR}) + R(\lambda_{RED})} \cdots (13)$$

In addition, a luminance value A can be simply replaced with a calculation expression using the luminance value A instead of R. When the NDVI selection button 1423 is pressed, in the wavelength information 1206, a wavelength band $\lambda_{RED}$ (620 to 690 [nm]) corresponding to red of the vegetation, the point ID 1201 of and the wavelength of an entry having a value in a near-infrared region $\lambda_{IR}$ (720 to 1200 [nm]) reflecting light are acquired from the imaging information 1200. A position indicated by the acquired point ID 1201 is specified from the X position 504 and the Y position 505 of the plan information 210 by the corresponding number 500 in the imaging information 1200.

The wavelength input region 1424 is a region that receives an input of an arbitrary wavelength. When a value of the wavelength is input to the wavelength input region 1424, the point ID 1201 of an entry having the value of the wavelength input in the wavelength information 1206 is acquired from the imaging information 1200. A position indicated by the acquired point ID 1201 is specified from the X position 504 and the Y position 505 of the plan information 210 by the corresponding number 500 in the imaging information 1200.

The acquisition unit 905 acquires the light source spectrum I($\lambda$), the luminance spectrum A($\lambda$), and the transmittance $S_{tc}(\lambda,L)$ for each point G by using the wavelength $\lambda$ selected in this manner, and calculates the reflectance spectrum R($\lambda$) by Expression (8) above.

The spectrum display region 1403 displays a graph 1430 of reflection spectrum waveforms 1431 to 1433 of the detailed map display region 1402 within the period designated by the calendar 1421. A horizontal axis of the graph represents the wavelength, and a vertical axis represents the reflectance spectrum R($\lambda$). The reflection spectrum waveforms 1431 to 1433 indicate a maximum value, a minimum value, and an average value of the reflectance spectrum R($\lambda$) based on a wavelength change at the point G of a cursor 1425 within the period designated by the calendar 1421. Which of the reflection spectrum waveforms 1431 to 1433 is to be adopted can be preset or selected by a user.

Bars 1434B, 1434G, and 1434R are displayed in a case where the RGB selection button 1422 is pressed. The bar 1434B indicates a blue wavelength, the bar 1434G indicates a green wavelength, and the bar 1434R indicates a red wavelength. The bars 1434B, 1434G, and 1434R are movable in a horizontal axis direction by a user operation.

For example, the generation unit 906 converts values at the wavelengths $\lambda$ selected by the bars 1434B, 1434G, and 1434R in the reflection spectrum waveform 1433 into the luminance values of red (R), green (G), and blue (B) by an RGB converter. Alternatively, the generation unit 906 multiplies a spectrum component of the light source set in advance by each of the reflectance spectra R($\lambda$) selected by the bars 1434B, 1434G, and 1434R in the reflection spectrum waveform 1433, and then converts each of the reflectance spectra R($\lambda$) into each of the converted luminance values of R, G, and **B.** The map data is generated by setting the converted luminance values of R, G, and B as the information regarding the pixel for each point G as the allocation destination.

The generation unit 906 cannot set the information regarding the pixel for a point (hereinafter, referred to as unallocated point) to which the information regarding the pixel is not allocated. In this case, the generation unit 906 sets a predetermined color (for example, black) for the unallocated point. In addition, the generation unit 906 may set a topographical map or a road map separately acquired for the unallocated point.

As described above, according to the present embodiment, it is possible to generate and display the map data in which a color of an image obtained by imaging the terrain is allocated to the terrain data 111. Further, by selecting a wavelength of a pixel, the map data corresponding to the selected wavelength can be generated and displayed.

Note that the present invention is not limited to the above-described embodiments, but includes various modifications and equivalent configurations within the scope of the appended claims. For example, the above-described embodiments have been described in detail in order to explain the present invention in an easy-to-understand manner, and the present invention is not necessarily limited to those having all the configurations described. Further, a part of the configuration of one embodiment may be replaced with the configuration of another embodiment. In addition, the configuration of another embodiment may be added to the configuration of one embodiment. In addition, a part of the configuration of each embodiment may be added with another configuration, may be deleted, or may be replaced with another configuration.

Further, a part of, or the entirety of the respective configurations, functions, processing units, processing means, and the like described above may be implemented by hardware, for example, may be designed as an integrated circuit, or may be implemented by software for a processor interpreting and executing programs for implementing the respective functions.

Information such as a program, a table, and a file for implementing each function can be stored in a storage device such as a memory, a hard disk, and a solid state drive (SSD), or a recording medium such as an integrated circuit (IC) card, an SD card, or a digital versatile disc (DVD) .

In addition, the control lines and information lines indicate those considered necessary for explanation, and do not necessarily indicate all the control lines and information lines necessary for implementation. In actual implementation, it may be considered that almost all configurations are interconnected.

Reference Signs List

| | |
|---|---|
| 100 | World coordinate system |
| 101 | Ground surface |
| 102 | Mobile body |
| 103 | Track |
| 110 | Image data sequence |
| 111 | Terrain data |
| 201 | Management apparatus |
| 202 | Generation apparatus |
| 203 | Distribution apparatus |
| 204 | Network |
| 210 | Plan information |
| 220 | Imaging device |
| 230 | Weather information |
| 301 | Processor |
| 302 | Storage device |
| 400 | Local coordinate system |
| 401 | Control unit |
| 402 | Position/posture calculation unit |
| 403 | Communication unit |
| 404 | Clock |
| 405 | Counter |
| 406 | Roll angle compensation mechanism |
| 407 | Side imaging device |
| 408 | Front imaging device |
| 410 | Wheel |
| 411 | Rotary encoder |
| 412 | Pickup coil |
| 420 | Wayside coil |
| 500 | Number |
| 504 | X position |
| 505 | Y position |
| 506 | Elevation |
| 507 | Pitch angle |
| 508 | Roll angle |
| 509 | Yaw angle |
| 510 | Reference |
| 511 | Section type |
| 512 | Curvature radius |
| 901 | Input unit |
| 902 | Recording unit |
| 903 | Correction unit |
| 904 | Determination unit |
| 905 | Acquisition unit |
| 906 | Generation unit |
| 907 | Output unit |

1200 Imaging information
1202 Time stamp
1203 Imaging position
1204 Imaging condition
1205 Weather condition
1206 Wavelength information
1207 Adoption Flag

**Claims**

1. A generation apparatus (202) comprising:

   a processor (301) that executes a program; and
   a storage device (302) that stores the program, **characterized in that**
   the storage device (302) stores terrain data (111) including position information of each point of terrain and obtained by modeling the terrain, first image data obtained by imaging a subject that is a part of the terrain from a first imaging point on the terrain, and position information of the first imaging point, and
   the processor (301) executes:

   determination processing of determining a point as an allocation destination to which information regarding a specific pixel corresponding to a line-of-sight vector in a pixel group forming the first image data is to be allocated based on a direction of the line-of-sight vector from the first imaging point to the subject; and
   generation processing of generating map data (112) corresponding to the terrain by allocating the information regarding the specific pixel determined by the determination processing to the point as the allocation destination.

2. The generation apparatus (202) according to claim 1, **characterized in that** the first image data is image data obtained by imaging the subject from a side of a mobile body using an imaging device of the mobile body moving on a ground surface forming the terrain.

3. The generation apparatus (202) according to claim 1, **characterized in that**, in the determination processing, the processor (301) determines whether or not to adopt the point as the allocation destination based on the information regarding the specific pixel.

4. The generation apparatus (202) according to claim 3, **characterized in that**, in the determination processing, the processor (301) determines whether or not to adopt the point as the allocation destination based on a weather condition (1205).

5. The generation apparatus (202) according to claim 4, **characterized in that**, in the determination processing, the processor (301) deletes, from the storage device (302), the first image data in which the number of pixels that are not adopted as the point as the allocation destination is equal to or larger than a predetermined number.

6. The generation apparatus (202) according to claim 1, **characterized in that**

   the processor (301) executes acquisition processing of acquiring the information regarding the specific pixel based on a light source spectrum, and
   in the generation processing, the processor (301) generates the map data (112) by allocating the information regarding the specific pixel acquired in the acquisition processing to the point as the allocation destination.

7. The generation apparatus (202) according to claim 6, **characterized in that** the information regarding the specific pixel is a first luminance spectrum of a light beam from the point as the allocation destination received by the imaging device, or a reflectance spectrum of the subject calculated based on the light source spectrum and the first luminance spectrum.

8. The generation apparatus (202) according to claim 7, **characterized in that**

   the first image data is image data generated by dispersing light of the subject for each wavelength, and
   in the generation processing, the processor (301) generates the map data (112) by converting a wavelength component of the first luminance spectrum or the reflectance spectrum into a luminance value as the information regarding the specific pixel.

9. The generation apparatus (202) according to claim 8, **characterized in that**, in the acquisition processing, the processor (301) calculates the reflectance spectrum of the subject based on the light source spectrum, the first luminance spectrum, and a transmittance between the imaging device and the subject.

10. The generation apparatus (202) according to claim 6, **characterized in that**

the storage device (302) stores second image data obtained by imaging a reflector having a known reflectance from a second imaging point on the terrain, and
in the acquisition processing, the processor (301) acquires the light source spectrum based on the known reflectance and a second luminance spectrum of a light beam from the reflector received by the imaging device.

11. The generation apparatus (202) according to claim 6, **characterized in that**, in the acquisition processing, the processor (301) acquires the light source spectrum based on a weather condition on a ground surface forming the terrain.

12. The generation apparatus (202) according to claim 8, **characterized in that**

the storage device (302) stores a plurality of pieces of the first image data having different imaging dates and times, and
in the generation processing, the processor (301) calculates the reflectance spectrum for each of the plurality of pieces of the first image data having different imaging dates and times, calculates a representative reflectance spectrum based on a plurality of the reflectance spectra, and generates the information regarding the specific pixel based on the luminance value and the representative reflectance spectrum.

13. The generation apparatus (202) according to claim 8, **characterized in that**, in the generation processing, the processor (301) generates vegetation evaluation map data by selecting a wavelength related to vegetation evaluation for the point as the allocation destination.

14. A generation method executed by a generation apparatus (202) including a processor (301) that executes a program, and a storage device (302) that stores the program, the generation method comprising:

storing, by the storage device (302), terrain data (111) including position information of each point of terrain and obtained by modeling the terrain, first image data obtained by imaging a subject that is a part of the terrain from a first imaging point on the terrain, and position information of the first imaging point; and
executing, by the processor (301), determination processing of determining a point as an allocation destination to which information regarding a specific pixel corresponding to a line-of-sight vector in a pixel group forming the first image data is to be allocated based on a direction of the line-of-sight vector from the first imaging point to the subject, and generation processing of generating map data (112) corresponding to the terrain by allocating the information regarding the specific pixel determined by the determination processing to the point as the allocation destination.

15. A generation program that causes a processor (301) configured to access a storage device (302) storing terrain data (111) including position information of each point of terrain and obtained by modeling the terrain, first image data obtained by imaging a subject that is a part of the terrain from a first imaging point on the terrain, and position information of the first imaging point to execute:

determination processing of determining a point as an allocation destination to which information regarding a specific pixel corresponding to a line-of-sight vector in a pixel group forming the first image data is to be allocated based on a direction of the line-of-sight vector from the first imaging point to the subject; and
generation processing of generating map data (112) corresponding to the terrain by allocating the information regarding the specific pixel determined by the determination processing to the point as the allocation destination.

FIG. 1

RECONFIGURATION

111

112

110

MOVING IMAGE FROM CAMERA FIXED TO VEHICLE BODY

101

103

102

100

Z
Y
X
O

TRAVELING DIRECTION

## FIG. 2

EP 4 733 717 A1

# FIG. 3

EP 4 733 717 A1

## FIG. 4A

## FIG. 4B

## FIG. 5

210

PLAN INFORMATION

| No.<br>(=k) | TRAVELING<br>DISTANCE L | COMMAND | COMMAND<br>ARGUMENT | X POSITION<br>[m] | Y POSITION<br>[m] | ELEVATION<br>[m] | PITCH ANGLE<br>$\beta$ | ROLL ANGLE<br>$\gamma$ | YAW ANGLE<br>$\alpha$ | REFERENCE | SECTION TYPE | CURVATURE RADIUS<br>[m] |
|---|---|---|---|---|---|---|---|---|---|---|---|---|
| 0 | 0.0 | | | 444372 | 4051234 | 74.29 | 0.198 | 0 | 90 | ABSENT | | |
| ... | ... | ... | ... | ... | ... | ... | ... | ... | ... | ... | ... | ... |
| 125 | 22433.0 | | | 445501 | 4051315 | 74.35 | 0.216 | 0 | 90 | ABSENT | STRAIGHT LINE | — |
| 126 | 22605.6 | START IMAGING | ALL | 445677 | 4051315 | 75.00 | 0.290 | 3.0 | 88.5 | PRESENT | ARC | 300 |
| 127 | 22916.3 | | | 445811 | 4051318 | 75.70 | -0.359 | 3.0 | 56.1 | ABSENT | ARC | 300 |
| 128 | 23322.9 | STOP IMAGING | CAMERA #2 | 445959 | 4051387 | 75.10 | -1.989 | 3.0 | 39.2 | ABSENT | ARC | 300 |
| 129 | 24041.9 | STOP IMAGING | ALL | 446056 | 4051628 | 64.25 | -1.989 | 0 | 9.6 | ABSENT | STRAIGHT LINE | — |
| 130 | 25270.0 | START IMAGING | ALL | 446121 | 4052086 | 46.57 | -0.331 | 0 | 9.6 | PRESENT | STRAIGHT LINE | — |
| ... | ... | ... | ... | ... | ... | ... | ... | ... | ... | ... | ... | ... |

500  501  502  503  504  505  506  507  508  509  510  511  512

EP 4 733 717 A1

## FIG. 6

START

S601 — START DRIVING

S602 — CALCULATE TRAVELING DISTANCE **L**

S603 — $L < L_{k+1}$?

NO →

S604 — k = k+1

S605 — k = K?

END

YES →

S606 — CALCULATE INTRA-SECTION TRAVELING DISTANCE I = $L_{k+1}$−L

S607 — SECTION TYPE? — STRAIGHT LINE →

ARC ↓

S609 — CALCULATE CHANGE AMOUNT OF AZIMUTH ANGLE

S610 — EXECUTE CIRCULAR INTERPOLATION PROCESSING

S608 — EXECUTE LINEAR INTERPOLATION PROCESSING

EP 4 733 717 A1

FIG. 7

EP 4 733 717 A1

# FIG. 8

OPTICAL AXIS OF
CAMERA

ANGLE OF
VIEW

407

407

102

410

410

ROLL
ANGLE $\gamma$

RAIL
INCLINATION
ANGLE

VEHICLE BODY
INCLINATION ANGLE

WITHOUT ROLL ANGLE
COMPENSATION MECHANISM

ANGLE OF
VIEW

407

407

102

410

410

WITH ROLL ANGLE
COMPENSATION MECHANISM

EP 4 733 717 A1

# FIG. 9

202 — GENERATION DEVICE

901 — ACQUISITION UNIT
902 — RECORDING UNIT
903 — CORRECTION UNIT
904 — DETERMINATION UNIT
905 — ACQUISITION UNIT
906 — GENERATION UNIT
907 — OUTPUT UNIT

302
210 — PLAN INFORMATION
230 — WEATHER INFORMATION
110 — IMAGE DATA SEQUENCE
111

# FIG. 10

202

GENERATION DEVICE

START

| ACQUIRE DATA | S1001 |

| CORRECT SELF-POSITION | S1002 |

| EXECUTE MAPPING PROCESSING | S1003 |

| ESTIMATE LIGHT SOURCE SPECTRUM | S1004 |

| GENERATE MAP DATA | S1005 |

| OUTPUT MAP DATA | S1006 |

END

FIG. 11

EP 4 733 717 A1

## FIG. 12

IMAGING INFORMATION 1200

| ID | No. (=k) | TIME STAMP | IMAGING POSITION | IMAGING CONDITION | WEATHER CONDITION | WAVELENGTH $\lambda_1$ | WAVELENGTH $\lambda_2$ | $\cdots$ | WAVELENGTH $\lambda_N$ | ADOPTION |
|---|---|---|---|---|---|---|---|---|---|---|
| G1 | 126 | YMD1 | P1 | IC1 | WC1 | 7200 | 7432 | ... | 6587 | Y |
| G2 | 127 | YMD2 | P2 | IC2 | WC2 | 2495 | 2881 | ... | 1543 | N |
| G3 | 128 | YMD3 | P3 | IC3 | WC3 | 5123 | 6256 | ... | 3210 | Y |
| ... | ... | ... | ... | ... | ... | ... | ... | ... | ... | ... |

1201  500  1202  1203  1204  1205  1206  1207

EP 4 733 717 A1

FIG. 13

ID:00ABCD

1301 — CAMERA 1

1302 — CAMERA 2

1303 — COMPLETE INPUT

1310

111

1300

| No. (=k) | TRAVELING DISTANCE L | COMMAND | COMMAND ARGUMENT | X POSITION [m] | Y POSITION [m] | ELEVATION [m] | PITCH ANGLE $\beta$ | ROLL ANGLE $\gamma$ |
|---|---|---|---|---|---|---|---|---|
| 0 | 0.0 | | | 444372 | 4051234 | 74.29 | 0.198 | 0 |
| ... | ... | ... | ... | ... | ... | ... | ... | ... |
| 125 | 22433.0 | | | 445501 | 4051315 | 74.35 | 0.216 | 0 |
| 126 | 22605.6 | START IMAGING | ALL | 445677 | 4051315 | 75.00 | 0.290 | 3.0 |
| 127 | 22916.3 | | | 445811 | 4051318 | 75.70 | -0.359 | 3.0 |

210

# FIG. 14

# EP 4 733 717 A1

## EUROPEAN SEARCH REPORT

**Application Number**

EP 25 19 4771

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/000006 A1 (ELLABOUDY AMEER [US] ET AL) 7 January 2021 (2021-01-07) | 1-9,11, 13-15 | INV.<br>G01C11/00 |
| A | * paragraphs [0050], [0053], [0054], [0064], [0065], [0087], [0108], [0110] - [0112] *<br>* paragraphs [0132], [0143], [0170] *<br>* figures 1, 11, 13, 16, 21 * | 10,12 | A01B79/00<br>G01C15/00<br>G06V20/10<br>G06V20/56 |

-----

**TECHNICAL FIELDS SEARCHED (IPC)**

G01C
G06F
A01B
G06V

The present search report has been drawn up for all claims

| Place of search | Date of completion of the search | Examiner |
|---|---|---|
| The Hague | 22 January 2026 | Kuhn, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 25 19 4771

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | Publication date | Patent family member(s) | | Publication date |
|---|---|---|---|---|
| US 2021000006 A1 | 07-01-2021 | US | 2021000006 A1 | 07-01-2021 |
| | | US | 2024065131 A1 | 29-02-2024 |
| | | WO | 2021003336 A1 | 07-01-2021 |

EPO FORM P0459

For more details about this annex : see Official Journal of the European Patent Office, No. 12/82

**EP 4 733 717 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014169939 A

- WO 201286658 A